# EUROPÄISCHE PATENTSCHRIFT

(11) **EP 3 360 257 B1**
(45) Veröffentlichungstag und Bekanntmachung des Hinweises auf die Patenterteilung: **22.05.2019**
(21) Anmeldenummer: 16774624.7
(22) Anmeldetag: 27.09.2016
(51) Int. Cl.: H04B 1/00, H04B 1/48, H04B 7/04, H04B 1/3822, H04B 7/06, H04B 7/08, H04L 12/40, H04B 1/08, H04Q 1/32, H04B 7/0413, H04M 9/08

(54) **KRAFTFAHRZEUG MIT MEHREREN ANTENNEN UND WENIGSTENS EINER ZENTRALEN KOMMUNIKATIONSEINRICHTUNG**
MOTOR VEHICLE HAVING A PLURALITY OF ANTENNAS AND AT LEAST ONE CENTRAL COMMUNICATION DEVICE
VÉHICULE AUTOMOBILE COMPORTANT UNE PLURALITÉ D'ANTENNES ET AU MOINS UN DISPOSITIF DE COMMUNICATION CENTRAL

(30) Priorität: 06.10.2015 DE 102015012893
(43) Veröffentlichungstag der Anmeldung: 15.08.2018
(73) Patentinhaber: Audi AG, 85045 Ingolstadt (DE)
(72) Erfinder: SPEHL, Jürgen, 85139 Wettstetten (DE)
(86) Internationale Anmeldenummer: PCT/EP2016/001606
(87) Internationale Veröffentlichungsnummer: WO 2017/059947

(56) Entgegenhaltungen:
- EP-A2- 0 924 864
- WO-A2-02/052774
- US-A1- 2014 044 026
- US-A1- 2014 153 674

## Beschreibung

Die Erfindung betrifft ein Kraftfahrzeug mit mehreren Antennen und wenigstens einer Kommunikationseinrichtung, die ausgebildet ist, wenigstens einen Kommunikationsdienst zum Senden von dem jeweiligen Kommunikationsdienst zugeordneten Sendeinformationen und/oder zum Empfangen von dem jeweiligen Kommunikationsdienst zugeordneten Empfangsinformationen über jeweils wenigstens eine der Antennen für einen Benutzer und/oder wenigstens eine weitere Kraftfahrzeugkomponente bereitzustellen, wobei das Kraftfahrzeug für jede der Antennen eine zugeordnete Antennenschaltung aufweist, die zur Umsetzung eines analogen, von der Antenne empfangenen Empfangssignals in digitale, der jeweiligen Antennenschaltung zugeordnete Empfangsdaten und/oder von digitalen, der jeweiligen Antennenschaltung zugeordneten Sendedaten in ein der zugeordneten Antenne zugeführtes analoges Sendesignal dient, wobei die Kommunikationseinrichtung dazu ausgebildet ist, zum Senden der Sendeinformationen die wenigstens einer der Antennenschaltungen zugeordneten Sendedaten in Abhängigkeit der Sendeinformationen zu generieren und an die jeweils zugeordnete Antennenschaltung zu übermitteln und zum Empfang einer Empfangsinformation die der Antennenschaltung oder wenigstens einer weiteren der Antennenschaltungen zugeordneten Empfangsdaten zu empfangen und die Empfangsinformation in Abhängigkeit der Empfangsdaten bereitzustellen.

In Kraftfahrzeugen sollen eine Vielzahl von Kommunikationsdiensten bereitgestellt werden. Einerseits sollen für Nutzer Kommunikationseinrichtungen, beispielsweise ins Fahrzeug integrierte Mobilfunkeinrichtungen, bereitgestellt werden. Andererseits sendet oder empfängt eine Vielzahl von Assistenzsystemen Informationen. Beispielsweise sollen über mehrere Antennen GPS-Signale empfangen werden und für einige Fahrerassistenzsysteme ist eine Fahrzeug-zu-Fahrzeug-Kommunikation oder eine Fahrzeug-zu-Infrastruktur-Kommunikation erforderlich. Es ist daher erforderlich, Antennen für die entsprechenden Kommunikationsdienste an dem Kraftfahrzeug vorzusehen.

Antennen an Kraftfahrzeugen können als eigenständige Elektronikkomponenten realisiert sein, die an vorhandenen Strukturen wie Scheiben, Außenspiegeln, Spoilern oder Stoßfängern angebracht oder in diese integriert sind. Steuergeräte, die einen jeweiligen Dienst zur Verfügung stellen, sind mit den aktiven Antennen über Hochfrequenzleitungen sternförmig verbunden. Mit einer steigenden Anzahl angebotener Kommunikationsdienste steigt die erforderliche Anzahl der Antennen und die Menge der Hochfrequenzverkabelung. Dies führt zu einem hohen Produktionsaufwand bei der Herstellung des Kraftfahrzeugs, erhöht das Kraftfahrzeuggewicht und benötigt zusätzlichen Bauraum im Kraftfahrzeug.

Aus der Druckschrift EP 0 924 864 A2 ist ein Digitalradiosystem mit einer Vielzahl von Modulen bekannt. Ein digitaler Signalprozessor ist mit den Ein- und Ausgängen, beispielsweise mit Antennenmodulen, über digitale Datenverbindungen verbunden.

Eine verteilte Architektur zum Empfangen und Senden von RF-Signalen ist aus der Druckschrift US 2014/0 044 026 A1 bekannt. Empfangsseitig können mehrere RF-Signale zu einem gemultiplexten Signal kombiniert werden. Dieses Signal kann anschließend in mehrere Informationssignale aufgeteilt werden.

Ein Verfahren zum digitalen Empfangen eines Signals ist aus der Druckschrift WO 02/052 774 A2 bekannt. Ein digitaler Rundfunkempfänger in einem Fahrzeug umfasst eine Mehrzahl von Antennen und eine der Anzahl der Antennen entsprechende Anzahl von Teil-Empfängern. Mittels eines Analog-Digital-Wandlers des jeweiligen Teil-Empfängers wird das Signal der jeweiligen Antenne direkt digitalisiert.

Die Druckschrift US 2014/0 153 674 A1 betrifft ein verteiltes Radiokommunikationsnetzwerk. Über ein erstes und zweites Gateway werden jeweils zumindest Teile von Daten eines Netzwerkknotens empfangen.

Die Druckschrift US 2014/0 243 033 A1 offenbart ein verteiltes Antennensystem. Eine Einrichtung zum Leiten von Datenströmen kann über separate elektro-optische Konverter empfangene Datenströme zu einem Sendedatenstrom zusammenfassen, der über eine Antenneneinrichtung übertragen werden kann.

Der vorliegenden Erfindung liegt somit die Aufgabe zugrunde, ein Kraftfahrzeug anzugeben, das demgegenüber verbessert ist.

Die Aufgabe wird erfindungsgemäß durch ein Kraftfahrzeug der eingangs genannten Art gelöst, wobei die Kommunikationseinrichtung dazu ausgebildet ist, in Abhängigkeit eines Betriebsparameters der Kommunikationseinrichtung eine oder mehrere der Antennen zum Senden der Sendeinformationen und/oder zum Empfangen der Empfangsinformation auszuwählen, wobei die Anzahl der durch den Kommunikationsdienst genutzten Antennen zeitlich veränderlich ist.

Es wird somit vorgeschlagen, eine Kommunikationseinrichtung zu nutzen, die digital mit Antennenschaltungen kommuniziert, welche die analoge Ansteuerung der Antenne mit einem Sendesignal in Abhängigkeit von durch die Kommunikationseinrichtung bereitgestellten digitalen Sendedaten bzw. die Umsetzung von analog über die Antenne empfangenen Empfangssignalen in der Kommunikationseinrichtung zugeführte Empfangsdaten durchführen.

Die Kommunikationseinrichtung kann selbst Kommunikationsdienste für einen Benutzer bereitstellen. Beispielsweise können Ein- und/oder Ausgabeeinrichtungen vorgesehen sein, über die die Kommunikationseinrichtung Mobilfunkdienstleistungen wie Telefonie, Kurznachrichtendienste, einen Internetzugang oder Ähnliches bereitstellen. Ergänzend oder alternativ kann wenigstens ein Kommunikationsdienst für weitere Kraftfahrzeugkomponenten bereitgestellt werden. Kommunikationsdienste können beispielsweise für eine Multimediaeinrichtung, eine separat von der Kommunikationseinrichtung ausgebildete Mobilfunkeinrichtung, ein Fahrerassistenzsystem, das eine Fahrzeug-zu-Fahrzeug- und/oder eine Fahrzeug-zu-Infrastruktur-Kommunikation nutzt und/oder ein Navigationsgerät, das GPS-Daten nutzt, bereitgestellt werden.

Die mehreren Antennen sind vorzugsweise zumindest teilweise voneinander beabstandet angeordnet. Beispielsweise können mehrere Antennen voneinander beabstandet an einem Fahrzeugdach angeordnet sein und/oder es können Antennen in Spiegeln, an Spoilern, an Scheiben und/oder an Stoßfängern genutzt werden.

Wird ein Kommunikationsdienst für weitere Kraftfahrzeugkomponenten bereitgestellt, so kann die Kommunikation der Kraftfahrzeugkomponente mit der Kommunikationseinrichtung derart erfolgen, dass die Kraftfahrzeugkomponente Nutzdaten sowie optional zusätzliche Codierungsinformationen an die Kommunikationseinrichtung bereitstellt, wonach die Codierung der Nutzdaten zur Übertragung durch ein dem Kommunikationsdienst entsprechendes Übertragungsprotokoll durch die Kommunikationseinrichtung und/oder die beteiligten Antennenschaltungen erfolgt. Alternativ kann eine Kraftfahrzeugkomponente jedoch auch bereits codierte Daten bereitstellen, wobei beispielsweise eine digitale Darstellung des Sendesignals auf einer Zwischenfrequenz oder Symbole oder Modulationssignale für eine im Rahmen der Übertragung genutzte Modulation, insbesondere eine Quadraturamplitudenmodulation, als codierte Daten genutzt werden können.

Die Sendedaten und/oder Empfangsdaten können die Sendeinformationen und/oder Empfangsinformationen ganz oder teilweise umfassen. In der Kommunikationseinrichtung selbst erfolgt nicht notwendigerweise eine Änderung der Codierung beim Übergang von Sendeinformationen zu Sendedaten bzw. von Empfangsdaten zu Empfangsinformationen. Die Kommunikationseinrichtung kann als eine Art Router agieren, der bereitgestellte Sendeinformationen als Sendedaten ganz oder teilweise an eine oder mehrere der Antennenschaltungen überträgt bzw. Empfangsdaten von einer oder mehreren der Antennenschaltungen sammelt und als Empfangsinformation bereitstellt. Die Empfangsdaten bzw. Sendedaten können in diesem Fall zusätzlich zu den Sende- bzw. Empfangsinformationen Protokolldaten umfassen, die der Steuerung der zugeordneten Antennenschaltung und/oder der Zeitsynchronisation dienen können.

Alternativ kann die Kommunikationseinrichtung auch eine Codierung von Sendeinformationen in Sendedaten bzw. eine Decodierung von Empfangsdaten in Empfangsinformationen durchführen, beispielsweise eine digitale Modulation bzw. Demodulation eines Trägersignals. Die Sendeinformationen und/oder die Empfangsinformationen können im Wesentlichen Nutzdaten darstellen. Die Sendedaten bzw. Empfangsdaten können Modulationssignalen für eine bzw. demodulierten Signalen einer Quadraturamplitudenmodulation oder einer digitalen Darstellung des Sendesignals bzw. des Empfangssignals, insbesondere nach einer Umsetzung auf eine Zwischenfrequenz, entsprechen.

Die Antennenschaltungen können jeweils wenigstens einen Analog-Digitalwandler und/oder wenigstens einen Digital-Analogwandler umfassen, wobei der Analog-Digitalwandler dazu dient, das Empfangssignal oder ein daraus abgeleitetes Signal in die Empfangsdaten oder von den Empfangsdaten umfasste digitale Teilempfangsdaten zu wandeln, und wobei der Digital-Analogwandler dazu dient, die Sendedaten oder von den Sendedaten umfasste Teilsendedaten in das Sendesignal oder in ein von einer Teilschaltung der Antennenschaltung in das Sendesignal überführbares analoges Vorsignal zu wandeln.

Die Sendedaten und/oder Empfangsdaten können neben den Teilsendedaten und/oder den Teilempfangsdaten zusätzlich Protokolldaten umfassen. Diese Protokolldaten können der Zeitsynchronisation der Kommunikationseinrichtung mit einer oder mehreren Antennenschaltungen und/oder der Steuerung der jeweiligen Antennenschaltung dienen. Beispielsweise können eine im Rahmen einer Modulation in der Antennenschaltung genutzte Trägerfrequenz, ein durch einen Phasenschieber eingestellter Phasenversatz, die Impedanz eines Impedanzglieds und/oder ein Verstärkungsfaktor eines Signalverstärkers der Antennenschaltung gesteuert werden. Empfangsseitig können beispielsweise Zeitstempel als Protokolldaten vorgesehen sein.

In verschiedenen Ausführungsformen des erfindungsgemäßen Kraftfahrzeugs können die Empfangsdaten und/oder die Sendedaten unterschiedliche Formate aufweisen und die Umsetzung in die Sende- und/oder Empfangssignale kann unterschiedlich erfolgen. Ein besonders einfacher Aufbau der Antennenschaltung ist möglich, wenn als Empfangsdaten und/oder Sendedaten bzw. als ein Teil hiervon eine digitale Darstellung des Sendesignals bzw. des Empfangssignals übermittelt wird. Die Kommunikationseinrichtung und/oder die Kraftfahrzeugkomponente, an die der Kommunikationsdienst bereitgestellt wird, führen in diesem Fall die Modulation der Sendeinformationen und/oder die Demodulation der Empfangsinformationen vollständig durch und die Antennenschaltung dient ausschließlich der Digital-Analog- bzw. Analog-Digital-Wandlung dieser Signale. Es wird somit ein Softwareradio implementiert, wodurch die nutzbaren Sendesignale und Empfangssignale ausschließlich durch die Programmierung der Kommunikationseinrichtung und/oder der weiteren Kraftfahrzeugkomponenten, durch die Bandbreite der Kommunikationskanäle für die Empfangsdaten und/oder die Sendedaten sowie durch die Bandbreite des Analog-Digitalwandlers und/oder des Digital-Analogwandlers begrenzt sind.

Die erforderliche Bandbreite für die Sende- und/oder Empfangsdaten kann reduziert werden, wenn eine Modulation des Sendesignals bzw. eine Demodulation des Empfangssignals zumindest teilweise durch die Antennenschaltung durchgeführt wird. Die Modulation und/oder Demodulation kann digital erfolgen. Alternativ kann eine Modulation nach der Digital-Analog-Wandlung bzw. eine Demodulation vor der Analog-Digital-Wandlung erfolgen. Die Digital-Analog-Wandlung und/oder die Analog-Digital-Wandlung können auf einer Zwischenfrequenz erfolgen, die niedriger als die Trägerfrequenz des Empfangssignals bzw. des Sendesignals ist. Eine solche Frequenzumsetzung ist beispielsweise durch ein multiplikatives Mischen des analogen Vorsignals bzw. des Empfangssignals mit dem Trägersignal und eine optionale anschließende Filterung möglich.

Wird eine Quadraturamplitudenmodulation genutzt, so können zwei Digital-Analogwandler genutzt werden, um zwei separate analoge Vorsignale bereitzustellen, von denen eines multiplikativ mit einem Trägersignal mit einer ersten Phasenlage und das zweite multiplikativ mit einem gleichfrequenten Trägersignal mit einer um 90° verschobenen Phasenlage multipliziert wird. Empfangsseitig kann ein Empfangssignal durch ein multiplikatives Mischen mit um 90° verschobenen Trägersignalen in zwei abgeleitete Signale umgesetzt werden, die über zwei Analog-Digitalwandler erfasst werden können.

Die Kommunikationseinrichtung kann ausgebildet sein, die einer der Antennenschaltungen zugeordneten Sendedaten in Abhängigkeit von verschiedenen der Kommunikationsdienste zugeordneten Sendeinformationen zu generieren und/oder verschiedenen der Kommunikationsdienste zugeordnete Empfangsinformationen in Abhängigkeit von der Antennenschaltung zugeordneten Empfangsdaten bereitzustellen. Es ist somit möglich, eine oder mehrere der Antennen jeweils für mehrere Kommunikationsdienste zu nutzen. Eine Nutzung einer Antenne für mehrere der Kommunikationsdienste kann derart erfolgen, dass die Antenne zu verschiedenen Zeiten für die verschiedenen Kommunikationsdienste genutzt wird. Es ist jedoch auch möglich, die Antenne im Wesentlichen zeitgleich für mehrere der Kommunikationsdienste zu nutzen, indem ein Multiplexverfahren genutzt wird. Als Muliplexverfahren kann beispielsweise ein Zeitmultiplexing genutzt werden, bei dem in kurzen Zeitintervallen zwischen dem Empfangen bzw. Senden für die verschiedenen Kommunikationsdienste umgeschaltet wird. Es ist jedoch auch möglich, ein Frequenzmultiplexing durchzuführen, bei dem für die den verschiedenen Kommunikationsdiensten zugeordneten Empfangssignale bzw. Sendesignale verschiedene Trägerfrequenzen genutzt werden.

Es ist jedoch auch möglich, dass ein Multiplexing durch die Antennenschaltung selbst erfolgt. Beispielsweise kann die Antennenschaltung in einem Kommunikationsnetzwerk, über das sie mit der Kommunikationseinrichtung verbunden ist, über mehrere virtuelle Adressen Sendedaten empfangen bzw. Empfangsdaten senden. Über jede dieser virtuellen Adressen kann eine virtuelle Antennenschaltung für die Kommunikationseinrichtung bereitgestellt werden. Über mehrere virtuelle Adressen bereitgestellte Sendedaten können durch die Antennenschaltung kombiniert werden, um ein Sendesignal zu generieren. Empfangssignale können derart umgewandelt werden, dass für die einzelnen Kommunikationsdienste separate Empfangsdaten über die verschiedenen virtuellen Adressen bereitgestellt werden.

Die Kommunikationseinrichtung kann dazu ausgebildet sein, zum Senden von einem der Kommunikationsdienste zugeordneten Sendeinformationen für verschiedene der Antennenschaltungen jeweils zugeordnete Sendedaten zu generieren und an die jeweils zugeordnete Antennenschaltung zu übermitteln, und/oder die dem Kommunikationsdienst zugeordneten Empfangsinformationen in Abhängigkeit von den den verschiedenen Antennenschaltungen zugeordneten Empfangsdaten bereitzustellen. Ein Dienst kann somit über mehrere der Antennen senden und/oder empfangen.

Die Kommunikationseinrichtung kann ausgebildet sein, in einem ersten Betriebsmodus die gesamten dem Kommunikationsdienst zugeordneten Sendeinformationen über jede der den verschiedenen Antennenschaltungen zugeordneten Antennen zu senden und/oder die gesamten dem Kommunikationsdienst zugeordneten Empfangsinformationen über jede der den verschiedenen Antennenschaltungen zugeordneten Antennen zu empfangen. Ein Senden bzw. Empfangen der Sendeinformationen bzw. Empfangsinformationen erfolgt somit redundant, womit die Robustheit der Kommunikation erhöht werden kann.

Die Kommunikationseinrichtung kann ausgebildet sein, in dem ersten Betriebsmodus die den verschiedenen Antennenschaltungen zugeordneten Sendedaten jeweils derart zu generieren, dass durch die verschiedenen Antennenschaltungen, abgesehen von einer jeweils vorgegebenen Signalphase und Signalamplitude, identische Sendesignale generiert werden. Die Signalamplitude und/oder die Signalphase kann für jede der Antennenschaltungen gleich sein. Es ist jedoch auch möglich, die Signalamplitude und/oder die Signalphase zu variieren, um beispielsweise eine Phasenauslöschung von durch verschiedene Antennen gesendeten Signalen zu minimieren. Ist eine Relativposition eines Empfängers der gesendeten Daten bekannt, so kann die Signalamplitude und die Signalphase für jede der Antennenschaltungen derart eingestellt werden, dass am Empfangsort eine konstruktive Interferenz auftritt. Dies entspricht einem sogenannten Beamforming in Senderichtung. Die Signalphase und/oder die Signalamplitude können durch die Kommunikationseinrichtung oder durch die den Kommunikationsdienst bereitstellende Kraftfahrzeugkomponente vorgegeben werden. Alternativ oder ergänzend ist es möglich, die Sendedaten jeweils derart zu generieren, dass ein Senden des Sendesignals durch die Antennen auf unterschiedlichen Trägerfrequenzen und/oder mit unterschiedlicher Codierung erfolgt, um ein redundantes Senden der Sendeinformationen über verschiedene der Antennen zu ermöglichen.

Im Stand der Technik sind mehrere Verfahren bekannt, die bei einem redundanten Senden bzw. einem redundanten Empfangen von gleichen Informationen über mehrere Antennen eine Verbesserung der Robustheit des Sendens bzw. des Empfangs ermöglichen. Neben einer Frequenzdiversität, bei der unterschiedliche Sendefrequenzen genutzt werden, und einer räumlichen Diversität, bei der voneinander beabstandete Antennen zum Senden oder Empfangen genutzt werden, sind insbesondere das Maximal-Ratio-Combining (MRC) auf der Empfangsseite und das sogenannte Cyclic-Delay und Space-Time Blockcode (STBC)-Verfahren auf der Sendeseite relevant. Beim Maximal-Ratio-Combining werden die Signale, die über verschiedene Antennen empfangen wurden, addiert, wobei die Addition gewichtet erfolgt und der Gewichtungsfaktor proportional zu dem Signal-zu-Rausch-Verhältnis des auf der jeweiligen Antenne empfangenen Signals ist. Beim Cyclic-Delay-Verfahren wird das identische Signal mehreren Antennen zugeführt, wobei unterschiedliche Verzögerungszeiten für das Signal genutzt werden, so dass die von den verschiedenen Antennen abgestrahlten Signale phasenverschoben sind. Bei einem Space-Time Block Code wird ebenfalls über alle genutzten Antennen insgesamt die gleiche Information gesendet. Das Senden erfolgt jedoch blockweise, wobei über eine Transformationsmatrix eine unterschiedliche zeitliche Umordnung der verschiedenen Blöcke für die verschiedenen Antennen vorgegeben ist. Durch die erfindungsgemäße zentrale Bereitstellung von Sendedaten bzw. die zentrale Zusammenführung von Empfangsdaten mehrerer Antennen sind die genannten Verfahren zur Robustheitssteigerung im erfindungsgemäßen Kraftfahrzeug besonders einfach umsetzbar.

Die Kommunikationseinrichtung kann ausgebildet sein, in dem ersten Betriebsmodus die von den verschiedenen Antennenschaltungen übermittelten Empfangsdaten derart zu kombinieren, dass es einer Addition der durch die verschiedenen Antennenschaltungen umgesetzten Empfangssignale mit vorgegebenen Gewichtungsfaktoren und einer vorgegebenen relativen Phasenverschiebung entspricht. Hiermit kann neben dem bereits erläuterten MRC-Combining auch ein sogenanntes digitales Beamforming umgesetzt werden, bei dem bei einer Nutzung von mehreren Antennen durch eine entsprechende Kombination der Empfangsdaten eine definierte Richtungsabhängigkeit der Empfangsempfindlichkeit des durch die Antennen gebildeten Antennenarrays eingestellt werden kann.

Die Kommunikationseinrichtung kann ausgebildet sein, in einem zweiten Betriebsmodus die den verschiedenen Antenneneinrichtungen zugeordneten Sendedaten in Abhängigkeit jeweils unterschiedlicher Teilinformation der Sendeinformationen zu generieren und/oder aus den den verschiedenen Antenneneinrichtungen zugeordneten Empfangsdaten jeweils unterschiedliche Teile der Empfangsinformationen zu ermitteln und durch Kombination dieser Teile die Empfangsinformationen bereitzustellen. Hierdurch kann der Datendurchsatz einer Kommunikation erhöht werden, indem über verschiedene Antennen verschiedene Teile der Sendeinformation bzw. der Empfangsinformation gesendet bzw. empfangen werden. Werden sowohl mehrere Sendeantennen als auch mehrere Empfangsantennen genutzt, so wird dies in der Nachrichtentechnik auch als Multiple-Input-Multiple-Output (MIMO) bezeichnet.

Die Kommunikationseinrichtung kann dazu ausgebildet sein, in Abhängigkeit wenigstens eines Betriebsparameters der Kommunikationseinrichtung automatisch zwischen dem ersten und dem zweiten Betriebsmodus umzuschalten. Als Betriebsparameter kann eine Empfangsstärke, beispielsweise in Form eines Signal-zu-Rausch-Verhältnisses, eines von einem Kommunikationspartner empfangenen Signals ermittelt werden und bei hoher Empfangsqualität kann der zweite Betriebsmodus genutzt werden, in dem hohe Kommunikationsgeschwindigkeiten erreicht werden. Wird ermittelt, dass die Empfangsstärke gering ist, so kann durch einen Wechsel in den ersten Betriebsmodus die Robustheit der Kommunikation erhöht werden. Es ist jedoch auch möglich, dass der Betriebsparameter durch eine Kraftfahrzeugkomponente oder dienstabhängig vorgegeben wird. Beispielsweise benötigen Multimediadienste häufig hohe Datenraten und es können relativ große Puffergrößen genutzt werden, so dass es vorteilhaft sein kann, diese im zweiten Betriebsmodus zu nutzen. Sind die Anforderungen an die Echtzeitfähigkeit und Zuverlässigkeit einer Kommunikation jedoch hoch, beispielsweise wenn im Rahmen eines Betriebs eines Fahrerassistenzsystems Daten zwischen verschiedenen Kraftfahrzeugen ausgetauscht werden, so kann der erste Betriebsmodus genutzt werden. Es ist auch möglich, in einem weiteren Betriebsmodus beide Vorgehen zu kombinieren, das heißt mehrere Antennengruppen vorzusehen, wobei innerhalb einer Gruppe die Antennen jeweils redundant genutzt werden und verschiedene Gruppen verschiedene Teilinformationen der Sendeinformationen senden bzw. verschiedene Teilinformationen der Empfangsinformationen bereitstellen.

Wenigstens eine der Antennenschaltungen kann zur Bereitstellung verschiedener Arten von Sendesignalen und/oder zur Umsetzung von verschiedenen Arten von Empfangssignalen in die Empfangsdaten dienen, wobei die verschiedenen Arten von Sendesignalen und/oder Empfangssignalen voneinander unterschiedliche Trägerfrequenzen und/oder Signalcodierungen aufweisen, wobei die Kommunikationseinrichtung zur Steuerung der Antennenschaltung zur Wahl der Trägerfrequenz und/oder der Signalcodierung in Abhängigkeit eines Betriebsparameters der Kommunikationseinrichtung dient. Die Trägerfrequenz und/oder die Signalcodierung können insbesondere in Abhängigkeit davon angepasst werden, welcher der Kommunikationsdienste momentan über die Antenne kommuniziert.

Die Kommunikationseinrichtung ist dazu ausgebildet in Abhängigkeit wenigstens eines Betriebsparameters der Kommunikationseinrichtung eine oder mehrere Antennen zum Senden der Sendeinformationen und/oder zum Empfang der Empfangsinformationen auszuwählen. Der Betriebsparameter kann die Auslastung einer oder mehrerer der Antennen, der genutzte Kommunikationsdienst und somit beispielsweise ein genutztes Frequenzband, eine für einen Kommunikationsdienst erforderliche Verbindungsqualität oder eine Priorität des Kommunikationsdienstes bzw. der zu empfangenden Empfangsinformationen und/oder der zu sendenden Sendeinformationen sein. Für wenigstens einen der Kommunikationsdienste ist die Anzahl der durch den Kommunikationsdienst genutzten Antennen zeitlich veränderlich. Wird beispielsweise nur ein Kommunikationsdienst genutzt, können alle Antennen oder alle Antennen, die zur Kommunikation durch den entsprechenden Kommunikationsdienst geeignet sind, zur Kommunikation genutzt werden. Wird ein weiterer Kommunikationsdienst durch den Benutzer oder eine Kraftfahrzeugkomponente angefordert, kann die Anzahl der durch den Kommunikationsdienst genutzten Antennen reduziert werden, um eine Kommunikation durch den weiteren Kommunikationsdienst zu ermöglichen oder es können einige oder alle der Antennen von beiden Kommunikationsdiensten gemeinsam genutzt werden.

Die Antennenschaltung kann eine veränderliche Impedanz umfassen, über die das Sendesignal der Antenne zuführbar ist und/oder das Empfangssignal von der Antenne erfasst wird, wobei die Kommunikationseinrichtung zur Steuerung der Antennenschaltung zur Veränderung der Impedanz dient. Beim erfindungsgemäßen Kraftfahrzeug können Antennen vorzugsweise für mehrere Kommunikationsdienste nutzbar sein. Um ein effizientes Senden oder Empfangen von Signalen zu ermöglichen ist es jedoch notwendig, eine Antenne an die zu empfangenen bzw. die zu sendenden Frequenzen anzupassen. In vielen Fällen ist ein Stimmen der Antenne durch ein Anpassen einer Impedanz möglich. Eine veränderliche Impedanz kann beispielsweise dadurch realisiert werden, dass Kondensatoren und/oder Widerstände in den Signalpfad bzw. zwischen den Signalpfad und ein Erdpotential geschaltet werden.

Die Antennenschaltungen und die Kommunikationseinrichtung können zu einem zeitsynchronen Betrieb ausgebildet sein. Die Zeitsynchronisation kann dadurch erfolgen, dass den Antennenschaltungen und der Kommunikationseinrichtung ein gemeinsames Taktsignal zugeführt wird. Es ist auch möglich, interne Taktungen der Antennenschaltungen und der Kommunikationseinrichtung zu nutzen, die über Synchronisationssignale, die im Rahmen der Sendedaten und/oder der Empfangsdaten oder separat davon ausgetauscht werden, synchronisiert werden. Durch eine Zeitsynchronisation zwischen den Antennenschaltungen und der Kommunikationseinrichtung können definierte Phasenbeziehungen zwischen den Sendesignalen bzw. den Empfangssignalen festgelegt bzw. ermittelt werden.

Das Kraftfahrzeug kann ein Kommunikationsnetzwerk umfassen, wobei mehrere der Antennenschaltungen über das Kommunikationsnetzwerk mit der Kommunikationseinrichtung verbunden sind, um die Sendedaten und/oder die Empfangsdaten zu übertragen. Das Netzwerk kann auch zur Zeitsynchronisation der Antennenschaltungen und der Kommunikationseinrichtung dienen, beispielsweise, indem definierte Zeitsynchronisationspakete über das Netzwerk übertragen werden.

Weitere Vorteile und Einzelheiten der Erfindung zeigen die folgenden Ausführungsbeispiele sowie die zugehörigen Zeichnungen. Dabei zeigen schematisch:
- Fig. 1 und 2: Ausführungsbeispiele zweier erfindungsgemäßer Kraftfahrzeuge,
- Fig. 3: eine Antennenschaltung des in Fig. 2 gezeigten Kraftfahrzeugs,
- Fig. 4: eine Kommunikationseinrichtung des in Fig. 2 gezeigten Kraftfahrzeugs, und
- Fig. 5 und 6: Beispiele zur Nutzung mehrerer Antennen durch mehrere Kommunikationsdienste in dem in Fig. 2 gezeigten Kraftfahrzeug.

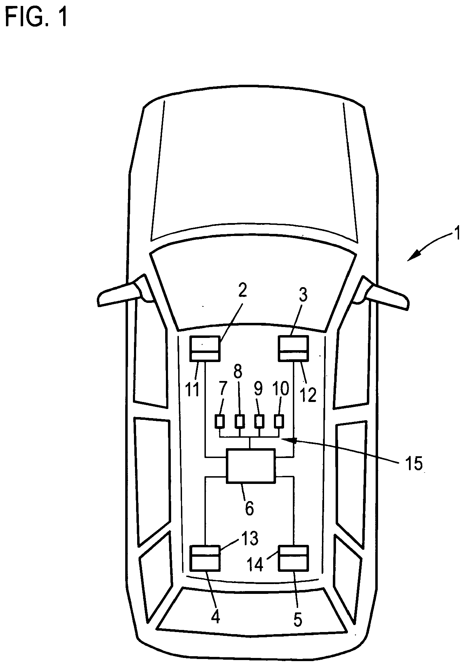

Fig. 1 zeigt ein Kraftfahrzeug 1 mit mehreren Antennen 2, 3, 4, 5 und einer Kommunikationseinrichtung 6. Die Kommunikationseinrichtung 6 stellt für die weiteren Kraftfahrzeugkomponenten 7, 8, 9, 10, eine Mobilfunkeinrichtung, einen Radioempfänger, eine Steuereinrichtung eines Fahrerassistenzsystems, die zur Fahrzeug-zu-Fahrzeug-Kommunikation ausgebildet ist, und ein Navigationsgerät, das GPS-Daten empfängt, jeweils Kommunikationsdienste bereit, die zum Empfangen einer Empfangsinformation bzw. zum Senden einer Sendeinformation über die Antennen 2, 3, 4, 5 dienen. Jeder der Antennen 2, 3, 4, 5 ist eine Antennenschaltung 11, 12, 13, 14 zugeordnet. Diese dienen jeweils zur Umsetzung eines analogen von der Antenne 2, 3, 4, 5 empfangenen Empfangssignals in digitale, der jeweiligen Antennenschaltung 11, 12, 13, 14 zugeordnete Empfangsdaten und von digitalen, der jeweiligen Antennenschaltung 11, 12, 13, 14 zugeordneten Sendedaten in ein der zugeordneten Antenne 2, 3, 4, 5 zugeführtes analoges Sendesignal. Die Kommunikationseinrichtung 6 ist dazu ausgebildet, zum Senden von Sendeinformationen Sendedaten in Abhängigkeit der Sendeinformationen zu generieren und an die den jeweiligen Sendedaten zugeordnete Antennenschaltung 11, 12, 13, 14 zu übermitteln, und zum Empfang einer Empfangsinformation von den Antennenschaltungen 11, 12, 13, 14 jeweils Empfangsdaten zu empfangen und die Empfangsinformation in Abhängigkeit der Empfangsdaten bereitzustellen. Die Kraftfahrzeugkomponenten 7, 8. 9, 10 kommunizieren mit der Kommunikationseinrichtung 6 über einen Fahrzeugbus 15, beispielsweise einen CAN-Bus.

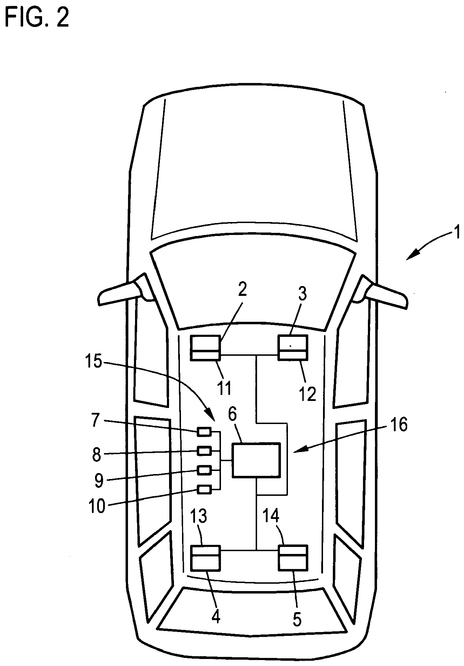

Fig. 2 zeigt ein weiteres Ausführungsbeispiel eines Kraftfahrzeugs 1 mit mehreren Antennen 2, 3, 4, 5. Die gezeigten Komponenten entsprechen in ihrer Funktion den in Fig. 1 gezeigten Komponenten weitgehend, weshalb sie mit den gleichen Bezugszeichen bezeichnet wurden. Wesentlicher Unterschied des in Fig. 2 dargestellten Kraftfahrzeugs 1 zu dem in Fig. 1 dargestellten Kraftfahrzeug 1 ist, dass die Antennenschaltungen 11, 12, 13, 14 über das Kommunikationsnetzwerk 16 mit der Kommunikationseinrichtung 6 kommunizieren. Im Gegensatz zur sternförmigen Verbindung der Antennenschaltungen 11, 12, 13, 14 mit der Kommunikationseinrichtung 6 ermöglicht das Kommunikationsnetzwerk 16 eine einfachere und flexiblere Verdrahtung. Das Kommunikationsnetzwerk 16 dient zur Übertragung der Empfangsdaten und der Sendedaten für die Antennenschaltungen 11, 12, 13, 14. Zusätzlich werden Synchronisationsinformationen für das Kommunikationsnetzwerk 16 übertragen, die eine Zeitsynchronisation der Kommunikationseinrichtung 6 mit den Antennenschaltungen 11, 12, 13, 14 ermöglichen. Das Kommunikationsnetzwerk 16 kann ein Ethernet-Protokoll nutzen. Die Datenübertragung kann nach dem Low Voltage Differential Signal (LVDS) Standard erfolgen.

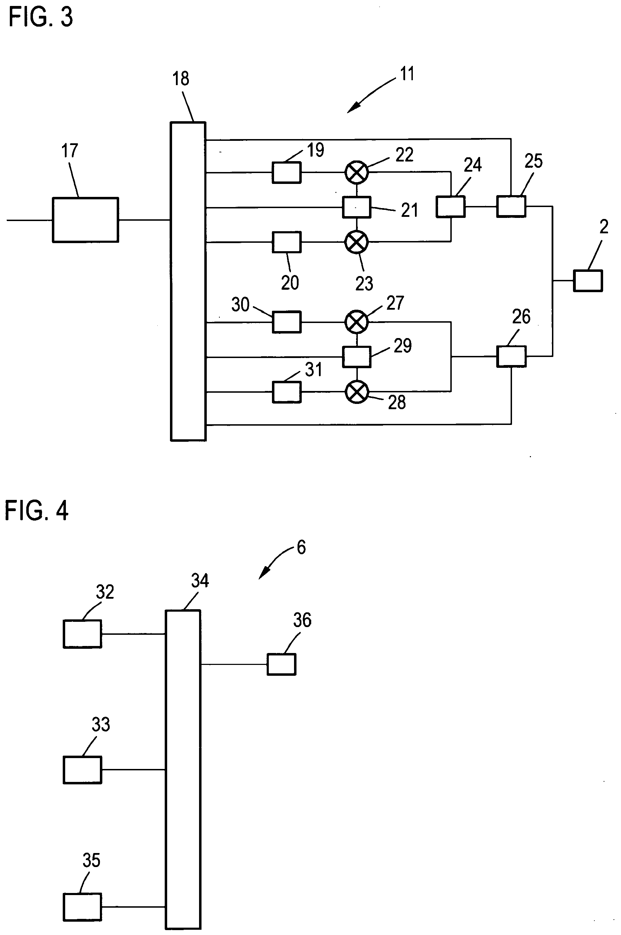

Fig. 3 zeigt schematisch die Struktur der Antennenschaltung 11. Die Antennenschaltung 11 ist über ein Netzwerkinterface 17 mit dem Kommunikationsnetzwerk 16 verbunden. Dieses Netzwerkinterface 17 implementiert Netzwerkfunktionen und ermöglicht das Ansprechen der Antennenschaltung 11 über das Kommunikationsnetzwerk 16 mit einer vorgegebenen Adresse. Über das Netzwerkinterface 17 empfangene Daten werden der Verarbeitungseinrichtung 18 zugeführt, die beispielsweise ein programmierter Mikrokontroller oder ein applikationsspezifischer Schaltkreis sein kann. Stellen die empfangenen Daten Sendedaten dar, die das Senden eines Sendesignals über die Antenne 2 auslösen sollen, so werden zunächst mit den Sendedaten übertragene Protokolldaten ausgewertet, um Konfigurationsinformationen für die Antennenschaltung 11 zu ermitteln. Diese Konfigurationsinformationen dienen zum einen dazu, die veränderlichen Impedanzen 25, 26 anzupassen, zum anderen dazu, die Signalgeneratoren 21, 29 für das Trägersignal bzw. das Demodulationssignal mit einer definierten Frequenz und einer definierten Phase zu starten.

In der gezeigten Antennenschaltung 11 wird zur Modulation eine Quadraturamplitudenmodulation genutzt. Daher werden die zu sendenden Sendedaten auf zwei Kanäle verteilt, deren Signale durch die beiden Digital-AnalogWandler 19, 20 separat in ein analoges Vorsignal gewandelt werden. Das analoge Vorsignal wird jeweils in den multiplikativen Mischern 22, 23 mit dem durch den Signalgenerator 21 bereitgestellten Trägersignal multiplikativ gemischt. Der Signalgenerator stellt für den Mischer 22 ein Modulationssignal mit einer ersten vorgegebenen Phase bereit und für den Mischer 23 ein demgegenüber um 90° verschobenes Signal. Die Ausgangssignale der Mischer 22, 23 werden mit dem analogen Addierer 24 addiert und über die veränderliche Impedanz 25 der Antenne 2 zugeführt.

Ein an der Antenne 2 empfangenes Empfangssignal wird über die veränderliche Impedanz 26 den Mischern 27, 28 zugeführt. Über einen Signalgenerator 29 wird ein Signal mit definierter Phase und der Trägerfrequenz des Empfangsignals dem Mischer 27 zugeführt und ein demgegenüber 90° phasenverschobenes Signal dem Mischer 28. Durch dieses Mischen mit dem Trägersignal und eine nicht gezeigte Filterung werden die Normalanteile (I) und die Quadraturanteile (Q) des Empfangssignals jeweils in das Basisband heruntergemischt und anschließend über die Analog-Digitalwandler 30, 31 gewandelt. In der Verarbeitungseinrichtung 18 werden die gewandelten Daten zusammengeführt und als Empfangsdaten über das Netzwerkinterface 17 an die Kommunikationseinrichtung 6 übertragen. Die Empfangsdaten werden mit einem Zeitstempel versehen, um eine Korrelation mit von weiteren Antennen 3, 4, 5 empfangenen Signalen zu ermöglichen.

Fig. 4 zeigt die Struktur der Kommunikationseinrichtung 6 des in Fig. 2 gezeigten Kraftfahrzeugs. Zur Bereitstellung von Kommunikationsdiensten weist die Kommunikationseinrichtung 6 ein Interface 32 für den Fahrzeugbus 15, beispielsweise einen CAN-Bus, auf, über den die weiteren Kraftfahrzeugkomponenten 7, 8, 9, 10 mit der Kommunikationseinrichtung 6 kommunizieren können, um die Kommunikationsdienste zu nutzen. Daneben weist die Kommunikationseinrichtung eine Ein-Ausgabeschnittstelle 33 auf, über die kommunikationseinrichtungseigene Ein-/Ausgabemittel mit der Kommunikationseinrichtung verbunden werden können. Beispielsweise kann ein Wandler für eine Audio-Ein- und Ausgabe vorgesehen werden, um Telefoniefunktionen durch die Kommunikationseinrichtung selbst zu ermöglichen oder Ähnliches. Eine Verarbeitungseinrichtung 34 ordnet den verschiedenen Diensten die verschiedenen Antennen 2, 3, 4, 5 und somit die Antennenschaltungen 11, 12, 13, 14 zu. Die Zuordnung erfolgt dynamisch und derart, dass einerseits eine Antenne durch mehrere Dienste nutzbar ist, wobei ein Multiplexverfahren genutzt wird und anderseits ein Dienst mehrere Antennen nutzen kann, um höhere Datenraten, eine höhere Robustheit der Kommunikation und/oder ein Zusammenwirken von Antennen zur Vorgabe einer richtungsabhängigen Sendeleistung bzw. Empfangsempfindlichkeit durch Beamforming zu erreichen.

Werden mehrere Antennen durch einen Kommunikationsdienst genutzt, so ist es in einem ersten Betriebsmodus möglich, alle von dem Dienst übertragenen Sendeinformationen über alle zugeordneten Antennen zu übertragen. In einem zweiten Betriebsmodus überträgt jede der Antennen nur Teilinformationen der Sendeinformationen. Die Zuordnung der Antennen zu den Diensten erfolgt in Abhängigkeit einer für das Kraftfahrzeug 1 fest vorgegebenen Priorität der Dienste, einer für den jeweiligen Dienst ermittelten Empfangsstärke der Gegenstelle und einer Auslastung der Antennen 2, 3, 4, 5 durch die Kommunikationsdienste. Nach der Zuordnung der Antennen werden durch die Verarbeitungsvorrichtung 34 für die den Antennen 2, 3, 4, 5 zugeordneten Antennenschaltungen 11, 12, 13, 14 jeweils Sendedatensätze generiert bzw. Empfangsdatensätze von ihnen empfangen, um die Sendeinformationen zu senden bzw. die Empfangsinformationen zu ermitteln. Die Datenübertragung zu bzw. von den Antennenschaltungen 11, 12, 13, 14 erfolgt über ein Netzwerkinterface 36. Über das Netzwerkinterface 36 werden zudem Synchronisationsnachrichten an die Antennenschaltungen 11, 12, 13, 14 gesendet. Hierfür umfasst die Kommunikationseinrichtung 6 einen zentralen Taktgeber 35.

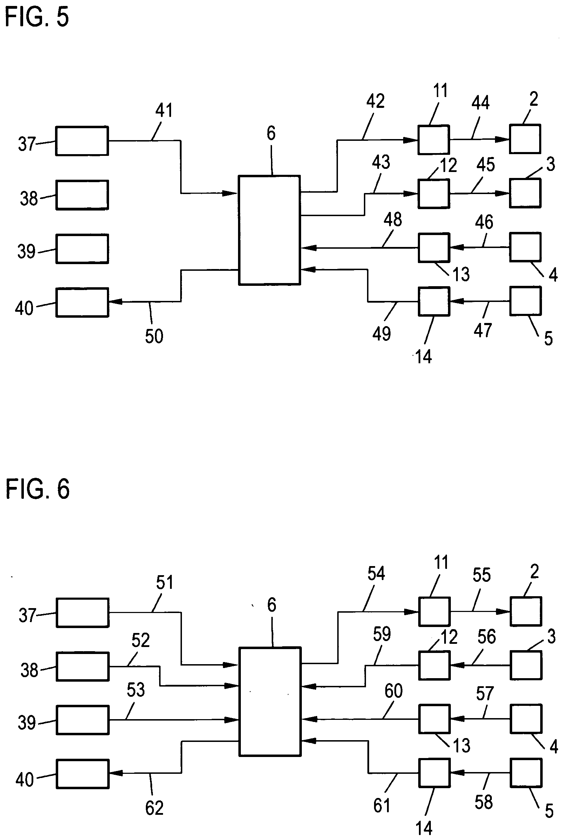

Figuren 5 und 6 zeigen schematisch, wie Sendeinformationen verschiedener Kommunikationsdienste 37, 38, 39, 40 über die Kommunikationseinrichtung 6 auf die Antennenschaltungen 11, 12, 13, 14 und somit auf die Antennen 2, 3, 4, 5 verteilt werden, bzw. wie Empfangsinformationen für die Kommunikationsdienste 37, 38, 39, 40 aus Empfangsdaten der Antennenschaltungen 11, 12, 13, 14 ermittelbar sind. Rein beispielhaft sind zwei Betriebszustände gezeigt. Im ersten, in Fig. 5 gezeigten Betriebszustand sollen Sendeinformationen 41 über einen Dienst 37 gesendet und Empfangsinformationen 50 über einen weiteren Kommunikationsdienst 40 empfangen werden. Sowohl für das Senden der Sendeinformationen 41 durch den Kommunikationsdienst 37 als auch durch das Empfangen der Empfangsinformationen 50 durch den Kommunikationsdienst 40 werden jeweils zwei Antennen 2, 3, 4, 5 genutzt. Bei dem Kommunikationsdenst 37 handelt es sich um eine Fahrzeug-zu-Fahrzeug-Kommunikation, die im Rahmen eines Fahrerassistenzsystems genutzt wird, weshalb eine hohe Robustheit der Kommunikation gewünscht ist. Daher werden die Sendeinformationen 41 jeweils vollständig über die Antennen 2, 3 übertragen. Die Kommunikationseinrichtung 6 ermittelt somit Sendedaten 42, 43, die von den Antennenschaltungen 11, 12 in identische Sendesignale 44, 45 umgesetzt werden, die jedoch einen Phasenversatz aufweisen, um Signalauslöschungen zu reduzieren.

Bei dem Kommunikationsdienst 40 handelt es sich um einen Empfang von Multimediainformationen. Um einen höheren Datendurchsatz zu erreichen, werden die Daten als Empfangssignale 46, 47 über die Antennen 4, 5 derart empfangen, dass die durch die Antennenschaltungen 13, 14 an die Kommunikationseinrichtung 6 übertragenen Empfangsdaten 48, 49 jeweils nur einen Teil Empfangsinformationen 50 beschreiben, wonach diese Teile in der Kommunikationseinrichtung 6 zu den Empfangsinformationen 50 kombiniert werden.

Fig. 6 zeigt eine weitere Betriebssituation, in der für den Kommunikationsdienst 40 ein weiter erhöhter Datendurchsatz erreicht werden soll, weshalb nun zusätzlich die Antenne 3 als Empfangsantenne genutzt wird. Es werden somit die Empfangssignale 56, 57, 58 in die Empfangsdaten 59, 60, 61 umgesetzt, aus denen in der Kommunikationseinrichtung 6 die Empfangsinformation 62 ermittelt und für den Kommunikationsdienst 40 bereitgestellt wird. Die Kommunikationsdienste 37, 38, 39 senden in diesem Betriebszustand alle mit einer geringen Datenrate und einer geringen erforderlichen Robustheit. Daher wird für die Kommunikationsdienste 37, 38, 39 ausschließlich die Antenne 2 genutzt, die im Multiplexbetrieb betrieben wird, um das Sendesignal 55 zu senden. Hierbei wird ein Zeitmultiplexverfahren genutzt, in dem die Kommunikationsdienste 37, 38, 39 abwechselnd über die Antenne 2 senden. Die der Antennenschaltung 11 zugeführten Sendedaten 54 umfassen daher in aufeinanderfolgenden zeitlichen Fenstern Sendedaten 54, die in Abhängigkeit der Sendeinformationen 51, 52, 53 der Kommunikationsdienste 37, 38, 39 generiert werden.

## Patentansprüche

1. Kraftfahrzeug mit mehreren Antennen (2, 3, 4, 5) und wenigstens einer Kommunikationseinrichtung (6), die ausgebildet ist, wenigstens einen Kommunikationsdienst (37, 38, 39, 40) zum Senden von dem jeweiligen Kommunikationsdienst (37, 38, 39, 40) zugeordneten Sendeinformationen (41, 51, 52, 52) und/oder zum Empfangen von dem jeweiligen Kommunikationsdienst (37, 38, 39, 40) zugeordneten Empfangsinformationen (50, 62) über jeweils wenigstens eine der Antennen (2, 3, 4, 5) für einen Benutzer und/oder wenigstens eine weitere Kraftfahrzeugkomponente (7, 8, 9, 10) bereitzustellen, wobei das Kraftfahrzeug (1) für jede der Antennen (2, 3, 4, 5) eine zugeordnete Antennenschaltung (11, 12, 13, 14) aufweist, die zur Umsetzung eines analogen, von der Antenne (2, 3, 4, 5) empfangenen Empfangssignals (46, 47, 56, 57, 58) in digitale, der jeweiligen Antennenschaltung (11, 12, 13, 14) zugeordnete Empfangsdaten (48, 49, 59, 60, 61) und/oder von digitalen, der jeweiligen Antennenschaltung (11, 12, 13, 14) zugeordneten Sendedaten (42, 43, 54) in ein der zugeordneten Antenne (2, 3, 4, 5) zugeführtes analoges Sendesignal (44, 45, 55) dient, wobei die Kommunikationseinrichtung (6) dazu ausgebildet ist, zum Senden der Sendeinformationen (41, 51, 52, 53) die wenigstens einer der Antennenschaltungen (11, 12, 13, 14) zugeordneten Sendedaten (42, 43, 54) in Abhängigkeit der Sendeinformationen (41, 51, 52) zu generieren und an die jeweils zugeordnete Antennenschaltung (11, 12, 13, 14) zu übermitteln und zum Empfang einer Empfangsinformation (50, 62) die der Antennenschaltung (11, 12, 13, 14) oder wenigstens einer weiteren der Antennenschaltungen (11, 12, 13, 14) zugeordneten Empfangsdaten (48, 49, 59, 60, 61) zu empfangen und die Empfangsinformation (50, 62) in Abhängigkeit der Empfangsdaten (48, 49, 59, 60, 61) bereitzustellen,
dadurch gekekennzeichnet,
dass die Kommunikationseinrichtung (6) dazu ausgebildet ist, in Abhängigkeit eines Betriebsparameters der Kommunikationseinrichtung eine oder mehrere der Antennen (2, 3, 4, 5) zum Senden der Sendeinformationen (41, 51, 52, 53) und/oder zum Empfangen der Empfangsinformation (50, 62) auszuwählen, wobei die Anzahl der durch den Kommunikationsdienst genutzten Antennen zeitlich veränderlich ist.

2. Kraftfahrzeug nach Anspruch 1,
**dadurch gekennzeichnet,**
**dass** die Antennenschaltungen (11, 12, 13, 14) jeweils wenigstens einen Analog-Digitalwandler (30, 31) und/oder wenigstens einen Digital-Analogwandler (19, 20) umfassen, wobei der Analog-Digitalwandler (30, 31) dazu dient, das Empfangssignal (46, 47, 56, 57, 58) oder ein daraus abgeleitetes Signal in die Empfangsdaten (48, 49, 59, 60, 61) oder von den Empfangsdaten (48, 49, 59, 60, 61) umfasste digitale Teilempfangsdaten zu wandeln, und wobei der Digital-Analogwandler (30, 31) dazu dient, die Sendedaten (42, 43, 54) oder von den Sendedaten (42, 43, 54) umfasste Teilsendedaten in das Sendesignal (44, 45, 55) oder in ein von einer Teilschaltung der Antennenschaltung in das Sendesignal (44, 45, 55) überführbares analoges Vorsignal zu wandeln.

3. Kraftfahrzeug nach Anspruch 1 oder 2,
**dadurch gekennzeichnet,**
**dass** die Kommunikationseinrichtung (6) ausgebildet ist, die einer der Antennenschaltungen (11, 12, 13, 14) zugeordneten Sendedaten (42, 42, 54) in Abhängigkeit von verschiedenen der Kommunikationsdienste (37, 38, 39, 40) zugeordneten Sendeinformationen (41, 51, 52, 53) zu generieren und/oder verschiedenen der Kommunikationsdienste (37, 38, 39, 40) zugeordnete Empfangsinformationen (50, 62) in Abhängigkeit von der Antennenschaltung (11, 12, 13, 14) zugeordneten Empfangsdaten (48, 49, 59, 60, 61) bereitzustellen.

4. Kraftfahrzeug nach einem der vorangehenden Ansprüche,
**dadurch gekennzeichnet,**
**dass** die Kommunikationseinrichtung (6) dazu ausgebildet ist, zum Senden von einem der Kommunikationsdienste (37, 38, 39, 40) zugeordneten Sendeinformationen (41, 51, 52, 53) für verschiedene der Antennenschaltungen (11, 12, 13, 14) jeweils zugeordnete Sendedaten (42, 43, 54) zu generieren und an die jeweils zugeordnete Antennenschaltung (11, 12, 13, 14) zu übermitteln, und/oder die dem Kommunikationsdienst (37, 38, 39, 40) zugeordneten Empfangsinformationen (50, 62) in Abhängigkeit von den den verschiedenen Antennenschaltungen (11, 12, 13, 14) zugeordneten Empfangsdaten (48, 49, 59, 60, 61) bereitzustellen.

5. Kraftfahrzeug nach Anspruch 4,
**dadurch gekennzeichnet,**
**dass** die Kommunikationseinrichtung (6) ausgebildet ist, in einem ersten Betriebsmodus die gesamten dem Kommunikationsdienst (37, 38, 39, 40) zugeordneten Sendeinformationen (41, 51, 52, 53) über jede der den verschiedenen Antennenschaltungen (11, 12, 13,14) zugeordneten Antennen (2, 3, 4, 5) zu senden und/oder die gesamten dem Kommunikationsdienst (37, 38, 39, 40) zugeordneten Empfangsinformationen (50, 62) über jede der den verschiedenen Antennenschaltungen (11, 12, 13, 14) zugeordneten Antennen (2, 3, 4, 5) zu empfangen.

6. Kraftfahrzeug nach Anspruch 5,
dass die Kommunikationseinrichtung (19) ausgebildet ist, in dem ersten Betriebsmodus die den verschiedenen Antennenschaltungen (11, 12, 13, 14) zugeordneten Sendedaten (42, 43, 54) jeweils derart zu generieren, dass durch die verschiedenen Antennenschaltungen (11, 12, 13, 14), abgesehen von einer jeweils vorgegebenen Signalphase und Signalamplitude, identische Sendesignale (44, 45, 55) generiert werden.

7. Kraftfahrzeug nach Anspruch 5 oder 6,
**dadurch gekennzeichnet,**
**dass** die Kommunikationseinrichtung (19) ausgebildet ist, in dem ersten Betriebsmodus die von den verschiedenen Antennenschaltungen (11, 12, 13, 14) übermittelten Empfangsdaten (48, 49, 59, 60, 61) derart zu kombinieren, dass es einer Addition der durch die verschiedenen Antennenschaltungen (11, 12, 13, 14) umgesetzten Empfangssignale (46, 47, 56, 57, 58) mit vorgegebenen Gewichtungsfaktoren und einer vorgegebenen relativen Phasenverschiebung entspricht.

8. Kraftfahrzeug nach einem der Ansprüche 4 bis 7,
**dadurch gekennzeichnet,**
**dass** die Kommunikationseinrichtung (6) ausgebildet ist, in einem zweiten Betriebsmodus die den verschiedenen Antenneneinrichtungen (11, 12, 13, 14) zugeordneten Sendedaten (42, 43, 54) in Abhängigkeit jeweils unterschiedlicher Teilinformation der Sendeinformationen (41, 51, 52, 53) zu generieren und/oder aus den den verschiedenen Antenneneinrichtungen (11, 12, 13,14) zugeordneten Empfangsdaten (48, 49, 59, 60, 61) jeweils unterschiedliche Teile der Empfangsinformationen (50, 62) zu ermitteln und durch Kombination dieser Teile die Empfangsinformationen (50, 62) bereitzustellen.

9. Kraftfahrzeug nach einem der Ansprüche 5 bis 7 und Anspruch 8,
**dadurch gekennzeichnet,**
**dass** die Kommunikationseinrichtung (6) dazu ausgebildet ist, in Abhängigkeit wenigstens eines Betriebsparameters der Kommunikationseinrichtung (6) automatisch zwischen dem ersten und dem zweiten Betriebsmodus zu umzuschalten.

10. Kraftfahrzeug nach einem der vorangehenden Ansprüche,
**dadurch gekennzeichnet,**
**dass** wenigstens eine der Antennenschaltungen (11, 12, 13, 14) zur Bereitstellung verschiedener Arten von Sendesignalen (44, 45, 55) und/oder zur Umsetzung von verschiedenen Arten von Empfangssignalen (46, 47, 56, 57, 58) in die Empfangsdaten (48, 49, 59, 60, 61) dient, wobei die verschiedenen Arten von Sendesignalen (44, 45, 55) und/oder Empfangssignalen (46, 47, 56, 57, 58) voneinander unterschiedliche Trägerfrequenzen und/oder Signalcodierungen aufweisen, wobei die Kommunikationseinrichtung (6) zur Steuerung der Antennenschaltung (11, 12, 13, 14) zur Wahl der Trägerfrequenz und/oder der Signalcodierung in Abhängigkeit wenigstens eines Betriebsparameters der Kommunikationseinrichtung (6) dient.

11. Kraftfahrzeug nach einem der vorangehenden Ansprüche,
**dadurch gekennzeichnet,**
**dass** die Antennenschaltung (11, 12, 13, 14) eine veränderliche Impedanz (25, 26) umfasst, über die das Sendesignal (44, 45, 55) der Antenne (2, 3, 4, 5) zuführbar ist und/oder das Empfangssignal (46, 47, 55, 56, 57) von der Antenne (2, 3, 4, 5) erfasst wird, wobei die Kommunikationseinrichtung (6) zur Steuerung der Antennenschaltung (11, 12, 13, 14) zur Veränderung der Impedanz dient.

12. Kraftfahrzeug nach einem der vorangehenden Ansprüche,
**dadurch gekennzeichnet,**
**dass** die Antennenschaltungen (11, 12, 13, 14) und die Kommunikationseinrichtung (6) zu einem zeitsynchronen Betrieb ausgebildet sind.

13. Kraftfahrzeug nach einem der vorangehenden Ansprüche,
**dadurch gekennzeichnet,**
**dass** es ein Kommunikationsnetzwerk (16) umfasst, wobei mehrere der Antennenschaltungen (11, 12, 13, 14) über das Kommunikationsnetzwerk (16) mit der Kommunikationseinrichtung (6) verbunden sind, um die Sendedaten (42, 43, 54) und/oder die Empfangsdaten (48, 49, 59, 60, 61) zu übertragen.

## Claims

1. Motor vehicle having several antennae (2, 3, 4, 5) and at least one communication device (6) which is formed to provide at least one communication service (37, 38, 39, 40) to transmit transmission information (41, 51, 52, 52) allocated to the respective communication service (37, 38, 39, 40) and/or to receive reception information (50, 62) allocated to the respective communication service (37, 38, 39, 40) via at least one of the antennae (2, 3, 4, 5) respectively for a user and/or at least one further motor vehicle component (7, 8, 9, 10), wherein the motor vehicle (1) has an allocated antenna circuit (11, 12, 13, 14) for each of the antennae (2, 3, 4, 5), which serves to translate an analogue reception signal (46, 47, 56, 57, 58) received by the antenna (2, 3, 4, 5) into digital reception data (48, 49, 59, 60, 61) allocated to the respective antenna circuit (11, 12, 13, 14) and/or from digital transmission data (42, 43, 54) allocated to the respective antenna circuit (11, 12, 13, 14) into an analogue transmission signal (44, 45, 55) supplied to the allocated antenna (2, 3, 4, 5), wherein the communication device (6) is formed to generate the transmission data (42, 43, 54) allocated to at least one of the antenna circuits (11, 12, 13, 14) to transmit the transmission information (41, 51, 52, 53) depending on the transmission information (41, 51, 52) and to convey it to the respectively allocated antenna circuit (11, 12, 13, 14) and to receive the reception data (48, 49, 59, 60, 61) allocated to the antenna circuit (11, 12, 13, 14) or at least one further antenna circuit (11, 12, 13, 14) to receive a piece of reception information (50, 62) and to provide the piece of reception information (50, 62) depending on the reception data (48, 49, 59, 60, 61),
**characterised in that**
the communication device (6) is formed to select one or more of the antennae (2, 3, 4, 5) to transmit the transmission information (41, 51, 52, 53) and/or to receive the reception information (50, 62) depending on an operating parameter of the communication device, wherein the number of antenna used by the communication service is variable over time.

2. Motor vehicle according to claim 1,
**characterised in that**
the antenna circuits (11, 12, 13, 14) comprise at least one analogue-digital converter (30, 31) and/or at least one digital-analogue converter (19, 20) respectively, wherein the analogue-digital converter (30, 31) serves to convert the reception signal (46, 47, 56, 57, 58) or a signal derived therefrom into the reception data (48, 49, 59, 60, 61) or digital partial reception data comprised of the reception data (48, 49, 59, 60, 61), and wherein the digital-analogue converter (30, 31) serves to convert the transmission data (42, 43, 54) or partial transmission data comprised of the transmission data (42, 43, 54) into the transmission signal (44, 45, 55) or into an analogue preliminary signal able to be transferred into the transmission signal (44, 45, 55) by a partial circuit of the antenna circuit.

3. Motor vehicle according to claim 1 or 2,
**characterised in that**
the communication device (6) is formed to generate the transmission data (42, 42, 54) allocated to one of the antenna circuits (11, 12, 13, 14) depending on different transmission information (41, 51, 52, 53) allocated to the communication services (37, 38, 39, 40) and/or to provide different reception information (50, 62) allocated to the communication services (37, 38, 39, 40) depending on reception data (48, 49, 59, 60, 61) allocated to the antenna circuit (11, 12, 13, 14).

4. Motor vehicle according to any one of the preceding claims,
**characterised in that**
the communication device (6) is formed to generate transmission data (42, 43, 54) allocated respectively to transmit transmission information (41, 51, 52, 53) allocated to one of the communication services (37, 38, 39, 40) for different antenna circuits (11, 12, 13, 14) and to convey it to the respectively allocated antenna circuit (11, 12, 13, 14), and/or to provide the reception information (50, 62) allocated to the communication service (37, 38, 39, 40) depending on the reception data (48, 49, 59, 60, 61) allocated to the different antenna circuits (11, 12, 13, 14).

5. Motor vehicle according to claim 4,
**characterised in that**
the communication device (6) is formed, in a first operating mode, to transmit the total transmission information (41, 51, 52, 53) allocated to the communication service (37, 38, 39, 40) via each of the antenna (2, 3, 4, 5) allocated to the different antenna circuits (11, 12, 13, 14) and/or to receive the total reception information (50, 62) allocated to the communication service (37, 38, 39, 40) via each of the antenna (2, 3, 4, 5) allocated to the different antenna circuits (11, 12, 13, 14).

6. Motor vehicle according to claim 5,
that the communication device (19) is formed, in the first operating mode, to generate the transmission data (42, 43, 54) allocated to the different antenna circuits (11, 12, 13, 14) respectively in such a way that identical transmission signals (44, 45, 55) are generated by the different antenna circuits (11, 12, 13, 14), apart from a respectively provided signal phase and signal amplitude.

7. Motor vehicle according to claim 5 or 6,
**characterised in that**
the communication device (19) is formed, in the first operating mode, to combine the reception data (48, 49, 59, 60, 61) conveyed by the different antenna circuits (11, 12, 13, 14) in such a way that it corresponds to an addition of the reception signals (46, 47, 56, 57, 58) translated by the different antenna circuits (11, 12, 13, 14) with provided weighting factors and a provided relative phase shift.

8. Motor vehicle according to any one of claims 4 to 7,
**characterised in that**
the communication device (6) is formed, in a second operating mode, to generate the transmission data (42, 43, 54) allocated to the different antenna devices (11, 12, 13, 14) depending on different partial information of the transmission information (41, 51, 52, 53) respectively and/or to determine different parts of the reception information (50, 62) respectively from the reception data (48, 49, 59, 60, 61) allocated to the different antenna devices (11, 12, 13, 14) and to provide the reception information (50, 62) by combination of these parts.

9. Motor vehicle according to any one of claims 5 to 7 and claim 8,
**characterised in that**
the communication device (6) is formed to switch automatically between the first and the second operating mode depending on at least one operating parameter of the communication device (6).

10. Motor vehicle according to any one of the preceding claims,
**characterised in that**
at least one of the antenna circuits (11, 12, 13, 14) serves to provide different types of transmission signals (44, 45, 55) and/or to translate from different types of reception signals (46, 47, 56, 57, 58) into the reception data (48, 49, 49, 60, 61), wherein the different types of transmission signals (44, 45, 55) and/or reception signals (46, 47, 56, 57, 58) have carrier frequencies and/or signal coding which are different to one another, wherein the communication device (6) serves to control the antenna circuit (11, 12, 13, 14) to select the carrier frequency and/or the signal coding depending on at least one operating parameter of the communication device (6).

11. Motor vehicle according to any one of the preceding claims,
**characterised in that**
the antenna circuit (11, 12, 13, 14) comprises a different impedance (25, 26), via which the transmission signal (44, 45, 55) of the antenna (2, 3, 4, 5) is able to be supplied and/or the reception signal (46, 47, 55, 56, 57) is detected by the antenna (2, 3, 4, 5), wherein the communication device (6) serves to control the antenna circuit (11, 12, 13, 14) to change the impedance.

12. Motor vehicle according to any one of the preceding claims,
**characterised in that**
the antenna circuits (11, 12, 13, 14) and the communication device (6) are formed to be a synchronous operation.

13. Motor vehicle according to any one of the preceding claims,
**characterised in that**
it comprises a communication network (16), wherein several of the antenna circuits (11, 12, 13, 14) are connected to the communication device (6) via the communication network (16) in order to transfer the transmission data (42, 43, 54) and/or the reception data (48, 49, 59, 60, 61).

## Revendications

1. Véhicule automobile avec plusieurs antennes (2, 3, 4, 5) et au moins un dispositif de communication (6), qui est conçu pour fournir au moins un service de communication (37, 38, 39, 40) pour l'émission d'informations d'émission (41, 51, 52, 52) associées par le service de communication (37, 38, 39, 40) respectif et/ou pour la réception d'informations de réception (50, 62) associées par le service de communication respectif (37, 38, 39, 40) par le biais respectivement d'au moins une des antennes (2, 3, 4, 5) pour un utilisateur et/ou au moins un autre composant de véhicule automobile (7, 8, 9, 10), dans lequel le véhicule automobile (1) comporte pour chacune des antennes (2, 3, 4, 5) un circuit d'antenne associé (11, 12, 13, 14) qui sert à la transformation d'un signal de réception analogique (46, 47, 56, 57, 58) reçu par l'antenne (2, 3, 4, 5) en données de réception (48, 49, 59, 60, 61) numériques associées au circuit d'antenne respectif (11, 12, 13, 14) et/ou de données d'émission (42, 43, 54) numériques associées au circuit d'antenne respectif (11, 12, 13, 14) en un signal d'émission (44, 45, 55) analogique amené à l'antenne associée (2, 3, 4, 5), dans lequel le dispositif de communication (6) est conçu pour générer, pour l'envoi des informations d'émission (41, 51, 52, 53), les données d'émission (42, 43, 54) associées à au moins un des circuits d'antenne (11, 12, 13, 14) en fonction des informations d'émission (41, 51, 52) et les transférer au circuit d'antenne (11, 12, 13, 14) respectivement associé et pour recevoir, pour la réception d'une information de réception (50, 62), les données de réception (48, 49, 59, 60, 61) associées au circuit d'antenne (11, 12, 13, 14) ou à au moins un autre des circuits d'antenne (11, 12, 13, 14) et pour fournir l'information de réception (50, 62) en fonction des données de réception (48, 49, 59, 60, 61),
**caractérisé en ce que**
le dispositif de communication (6) est conçu pour sélectionner, en fonction d'un paramètre de fonctionnement du dispositif de communication, une ou plusieurs des antennes (2, 3, 4, 5) pour l'émission des informations d'émission (41, 51, 52, 53) et/ou pour la réception de l'information de réception (50, 62), dans lequel le nombre des antennes utilisées par le service de communication est variable dans le temps.

2. Véhicule automobile selon la revendication 1,
**caractérisé en ce que**
les circuits d'antenne (11, 12, 13, 14) comprennent respectivement au moins un convertisseur analogique-numérique (30, 31) et/ou au moins un convertisseur numérique-analogique (19, 20), dans lequel le convertisseur analogique-numérique (30, 31) sert à convertir le signal de réception (46, 47, 56, 57, 58) ou un signal déduit de ce dernier en les données de réception (48, 49, 59, 60, 61) ou en données de réception partielles numériques comprises par les données de réception (48, 49, 59, 60, 61), et dans lequel le convertisseur numérique-analogique (30, 31) sert à convertir les données d'émission (42, 43, 54) ou des données d'émission partielles comprises par les données d'émission (42, 43, 54) en le signal d'émission (44, 45, 55) ou en un signal d'avertissement analogique pouvant être inséré dans le signal d'émission (44, 45, 55) par un sous-circuit du circuit d'antenne.

3. Véhicule automobile selon la revendication 1 ou 2,
**caractérisé en ce que**
le dispositif de communication (6) est conçu pour générer les données d'émission (42, 42, 54) associées à un des circuits d'antenne (11, 12, 13, 14) en fonction de diverses informations d'émission (41, 51, 52, 53) associées aux services de communication (37, 38, 39, 40) et/ou fournir diverses informations de réception (50, 62) associées aux services de communication (37, 38, 39, 40) en fonction de données de réception (48, 49, 59, 60, 61) associées au circuit d'antenne (11, 12, 13, 14).

4. Véhicule automobile selon l'une quelconque des revendications précédentes,
**caractérisé en ce que**
le dispositif de communication (6) est conçu pour générer, pour l'envoi d'informations d'émission (41, 51, 52, 53) associées à un des services de communication (37, 38, 39, 40), diverses données d'émission (42, 43, 54) respectivement associées aux circuits d'antenne (11, 12, 13, 14) et pour les transférer au circuit d'antenne (11, 12, 13, 14) respectivement associé, et/ou pour fournir les informations de réception (50, 62) associées au service de communication (37, 38, 39, 40) en fonction de données de réception (48, 49, 59, 60, 61) associées aux divers circuits d'antenne (11, 12, 13, 14).

5. Véhicule automobile selon la revendication 4,
**caractérisé en ce que**
le dispositif de communication (6) est conçu pour envoyer, dans un premier mode de fonctionnement, toutes les informations d'émission (41, 51, 52, 53) associées au service de communication (37, 38, 39, 40) par le biais de chacune des antennes (2, 3, 4, 5) associées aux divers circuits d'antenne (11, 12, 13,14) et/ou pour recevoir toutes les informations de réception (50, 62) associées au service de communication (37, 38, 39, 40) par le biais de chacune des antennes (2, 3, 4, 5) associées aux divers circuits d'antenne (11, 12, 13, 14).

6. Véhicule automobile selon la revendication 5,
que le dispositif de communication (19) est conçu, dans le premier mode de fonctionnement, pour générer les données d'émission (42, 43, 54) associées aux divers circuits d'antenne (11, 12, 13, 14) respectivement de manière que des signaux d'émission identiques (44, 45, 55), à l'exception d'une phase de signal et d'une amplitude de signal respectivement prédéfinies, sont générés par les divers circuits d'antenne (11, 12, 13, 14).

7. Véhicule automobile selon la revendication 5 ou 6,
**caractérisé en ce que**,
le dispositif de communication (19) est conçu pour, dans le premier mode de fonctionnement, combiner les données de réception (48, 49, 59, 60, 61) transférées par les divers circuits d'antenne (11, 12, 13, 14) de manière que cela correspond à une addition des signaux de réception (46, 47, 56, 57, 58) transformés par les divers circuits d'antenne (11, 12, 13, 14) avec des facteurs de pondération prédéfinis et un décalage de phase relatif prédéfini.

8. Véhicule automobile selon l'une quelconque des revendications précédentes 4 à 7,
**caractérisé en ce que**
le dispositif de communication (6) est conçu pour, dans un second mode de fonctionnement, générer les données d'émission (42, 43, 54) associées aux divers dispositifs d'antennes (11, 12, 13, 14) en fonction d'une information partielle respectivement différente des informations d'émission (41, 51, 52, 53) et/ou déterminer à partir des données de réception (48, 49, 59, 60, 61) associées aux divers dispositifs d'antennes (11, 12, 13, 14) des parties respectivement différentes des informations de réception (50, 62) et fournir les informations de réception (50, 62) par combinaison de ces parties.

9. Véhicule automobile selon l'une quelconque des revendications 5 à 7 et la revendication 8, **caractérisé en ce que**
le dispositif de communication (6) est conçu pour commuter automatiquement, en fonction d'au moins un paramètre de fonctionnement du dispositif de communication (6), entre le premier et le second mode de fonctionnement.

10. Véhicule automobile selon l'une quelconque des revendications précédentes,
**caractérisé en ce que**
au moins un des circuits d'antenne (11, 12, 13, 14) sert à la fourniture de divers types de signaux d'émission (44, 45, 55) et/ou à la transformation de divers types de signaux de réception (46, 47, 56, 57, 58) dans les données de réception (48, 49, 59, 60, 61), dans lequel les divers types de signaux d'émission (44, 45, 55) et/ou de signaux de réception (46, 47, 56, 57, 58) comportent des fréquences porteuses et/ou des codages de signaux différents les uns des autres, dans lequel le dispositif de communication (6) sert à la commande du circuit d'antenne (11, 12, 13, 14) pour la sélection de la fréquence porteuse et/ou du codage de signal en fonction d'au moins un paramètre de fonctionnement du dispositif de communication (6).

11. Véhicule automobile selon l'une quelconque des revendications précédentes,
**caractérisé en ce que**
le circuit d'antenne (11, 12, 13, 14) comprend une impédance variable (25, 26) par le biais de laquelle le signal d'émission (44, 45, 55) peut être amené à l'antenne (2, 3, 4, 5) et/ou le signal de réception (46, 47, 55, 56, 57) est détecté par l'antenne (2, 3, 4, 5), dans lequel le dispositif de communication (6) sert à la modification de l'impédance pour la commande du circuit d'antenne (11, 12, 13, 14).

12. Véhicule automobile selon l'une quelconque des revendications précédentes,
**caractérisé en ce que**
les circuits d'antenne (11, 12, 13, 14) et le dispositif de communication (6) sont conçus pour un fonctionnement synchrone.

13. Véhicule automobile selon l'une quelconque des revendications précédentes,
**caractérisé en ce que**
il comprend un réseau de communication (16), dans lequel plusieurs des circuits d'antenne (11, 12, 13, 14) sont reliés au dispositif de communication (6) par le biais du réseau de communication (16) pour transmettre les données d'émission (42, 43, 54) et/ou les données de réception (48, 49, 59, 60, 61).
